## Europäisches Patentamt
## European Patent Office
## Office européen des brevets

(19)

(11) Numéro de publication: **0 179 696 B1**

(12) # FASCICULE DE BREVET EUROPEEN

(45) Date de publication du fascicule du brevet:
**09.12.87**

(51) Int. Cl.⁴: **B 64 C 27/58,** B 64 C 27/72

(21) Numéro de dépôt: 85401873.6

(22) Date de dépôt: **25.09.85**

(54) **Dispositif à plateaux cycliques entraînés par lames souples, pour la commande d'un rotor d'hélicoptère.**

(30) Priorité: **26.09.84 FR 8414787**

(43) Date de publication de la demande:
**30.04.86 Bulletin 86/18**

(45) Mention de la délivrance du brevet:
**09.12.87 Bulletin 87/50**

(84) Etats contractants désignés:
**DE GB IT**

(56) Documents cités:
**FR - A - 2 528 793**
**US - A - 4 326 834**

(73) Titulaire: **AEROSPATIALE Société Nationale Industrielle, 37, Boulevard de Montmorency, F-75781 Paris Cédex 16 (FR)**

(72) Inventeur: **Aubry, Jacques Antoine, Domaine du Lac Bleu 2, Avenue Marie Gasquet, F-13480 Cabries (FR)**
Inventeur: **Bonfils, Michel Robert, Chemin de la mer, F13760 Saint-Cannat (FR)**

(74) Mandataire: **Lepeudry-Gautherat, Thérèse et al, Armengaud Jeune Cabinet Lepeudry 23 boulevard de Strasbourg, F-75010 Paris (FR)**

## Description

La présente invention concerne les dispositifs à plateaux cycliques de commande de l'incidence des pales d'un rotor sustentateur d'hélicoptère, et elle a trait plus particulièrement aux organes d'un dispositif de ce type qui assurent le guidage en translation axiale et en basculement des plateaux cycliques par rapport à un arbre d'entraînement du rotor, ainsi que l'entraînement de l'un des plateaux avec l'arbre du rotor et l'immobilisation en rotation de l'autre plateau par rapport à la structure de l'hélicoptère.

Il est bien connu que la commande de l'incidence des pales d'un rotor sustentateur d'hélicoptère, qui est solidaire d'un arbre rotor et entraîné en rotation par ce dernier autour d'un axe de rotation du rotor, est généralement assurée par un dispositif de commande comportant deux plateaux cycliques, disposés autour de l'arbre rotor et dont l'un est un plateau tournant, entraîné en rotation avec l'arbre rotor et monté en rotation par au moins un roulement à billes sur l'autre plateau, qui est un plateau non tournant, immobilisé en rotation autour de l'axe du rotor. Sur le plateau non tournant s'articulent les extrémités supérieures de commandes pilotes, par exemple des bielles de commande ou des servo-commandes, qui entraînent des déplacements axiaux et des pivotements de ce plateau sur un mécanisme de guidage en translation axiale et en basculement du plateau non tournant par rapport à l'arbre rotor. Des biellettes de commande de pas, articulées par leur extrémité supérieure à des leviers de commande de l'incidence des pales, sont également articulées par leur extrémité inférieure sur le plateau tournant. Le dispositif comprend enfin un mécanisme d'entraînement en rotation du plateau tournant et d'immobilisation en rotation du plateau non tournant, comportant au moins un organe articulé d'une part sur le plateau tournant et d'autre part sur l'arbre rotor, et au moins un organe articulé d'une part sur le plateau non tournant et d'autre part sur un élément de structure de l'hélicoptère. De la sorte, lorsqu'on manœuvre les commandes pilotes qui attaquent le plateau non tournant, les mouvements de ce dernier sont suivis par le plateau tournant, qui les transmet aux leviers de commande de l'incidence des pales, par l'intermédiaire des biellettes de commande du pas.

Des exemples de dispositifs de commande de ce type sont décrits notamment dans les brevets français Nos 1 049 106 et 2 119 828.

Dans les dispositifs de commande de ce type qui équipent de nombreux hélicoptères modernes, le mécanisme de guidage en translation axiale et en basculement du plateau non tournant par rapport à l'arbre rotor comprend une rotule sphérique, sur laquelle le plateau non tournant est monté et bascule lors des variations cycliques du pas, la rotule étant elle-même montée coulissante axialement et déplacée le long de l'arbre rotor, lors des variations collectives du pas, sur un guide tubulaire entourant l'arbre rotor et non rotatif, et qui prolonge vers le haut le carter de la boîte de transmission principale par laquelle l'arbre rotor est entraîné en rotation.

Chacun des organes du mécanisme d'entraînement en rotation du plateau tournant, qui sont articulés sur ce dernier et sur l'arbre rotor est un compas supérieur tournant, dont l'extrémité supérieure est articulée sur un entraîneur de compas lié en rotation à l'arbre rotor, et dont l'extrémité inférieure est articulée sur le plateau tournant, et chacun des organes du mécanisme d'immobilisation en rotation du plateau non tournant, qui sont articulés sur le plateau non tournant et sur la structure de l'hélicoptère, est un compas inférieur non tournant, dont l'extrémité supérieure est articulée sur le plateau non tournant et dont l'extrémité inférieure est articulée sur la partie supérieure du carter de liaison de l'arbre rotor à la boîte de transmission principale, ces compas étant articulés par des rotules et des paliers auto-lubrifiants.

Il a récemment été proposé, par le brevet des Etats-Unis d'Amérique No 4 326 834, un dispositif de commande de l'incidence des pales d'un rotor qui comprend deux plateaux de commande annulaires entourant l'arbre rotor, axialement espacés l'un de l'autre le long de ce dernier, et reliés l'un à l'autre à leur périphérie radiale externe par des compas constitués chacun de deux lames flexibles fixées l'une à l'autre par leur extrémité radiale externe et fixées par leur extrémité radiale interne l'une au plateau supérieur et l'autre au plateau inférieur. Des organes de roulement de forme biconique sont montés en rotation sur chacun des deux plateaux et sont engagés radialement vers l'intérieur dans des gorges périphériques de forme correspondante présentées par deux pistes annulaires. La piste coopérant avec les organes de roulement du plateau inférieur est solidaire de l'extrémité inférieure d'un manchon monté coulissant axialement sur l'arbre rotor et solidaire en rotation de ce dernier par clavetage, tandis que la piste coopérant avec les organes de roulement du plateau supérieur est fixée à l'extrémité inférieure d'un organe tubulaire tronconique, entourant sans contact le manchon coulissant et divergeant vers son extrémité supérieure, qui est fixée à la périphérie d'un diaphragme annulaire flexible, dont le bord interne est fixé à l'extrémité supérieure du manchon coulissant. L'organe tubulaire tronconique porte des bras radiaux, dont chacun est relié au levier de commande de l'incidence de l'une des pales du rotor par une biellette. Les commandes pilotes comprennent un ensemble de leviers d'actionnement, dont les pivotements commandent les translations axiales du plateau inférieur, et ces translations sont transmises d'une part au manchon coulissant rotatif par les organes de roulement correspondants et par la piste rotative correspondante et, d'autre part, à l'organe tubulaire tronconique par les compas à lames flexibles, le plateau supérieur, les organes de roulement de ce dernier, et la bague rotative correspondante, ainsi que par le diaphragme flexible reliant le manchon coulissant à l'organe tubulaire tronconique, et entraînant ce dernier en rotation, ce qui permet la variation du pas collectif. Les commandes pilotes comprennent également des câbles de commande, dont les gaines immobilisent les deux plateaux en rotation autour de l'arbre rotor, et tels que des tractions différentielles exercées sur les câbles commandent le basculement, par rapport au plateau inférieur et à l'arbre rotor, du plateau supérieur et de l'organe tubulaire tronconique, ce qui permet la variation cyclique du pas, le diaphragme flexible ainsi déformé tendant à rappeler élastiquement l'organe tubulaire et le plateau supérieur en position neutre et centrée autour de l'arbre rotor.

Le diaphragme, qui coulisse axialement avec le manchon, n'est donc déformé que pour permettre la variation cyclique du pas par basculement du plateau supérieur non tournant et de l'organe tubulaire tournant.

Du fait de sa disposition ainsi que de la fixation par boulonnage de ses bords radiaux interne et externe respectivement sur une collerette de l'arbre rotor et sur l'organe tubulaire tronconique, il est douteux que le diaphragme annulaire flexible d'un tel dispositif puisse se déformer suffisamment et de façon stable pour suivre ne serait-ce que les déplacements angulaires du plateau supérieur, qui sont de l'ordre de 15 à 30° suivant les types d'hélicoptères.

De plus, du fait de la structure des organes de roulement et des commandes pilotes à câbles permettant la commande cyclique du pas, la réalisation d'un tel dispositif doit être particulièrement soignée, et donc coûteuse, si l'on veut atteindre le degré de précision des commandes requis sur les hélicoptères modernes.

Par la présente invention, on se propose de simplifier la structure, et donc de diminuer les coûts de fabrication et de maintenance, de dispositifs de commande du type comprenant deux plateaux cycliques dont l'un, tournant, est monté en rotation sur l'autre, non tournant, sans cependant présenter l'inconvénient de performances limitées qui est attaché aux dispositifs de commande décrit dans le brevet des Etats-Unis d'Amérique N° 4 326 834.

A cet effet, le dispositif à plateaux cycliques selon l'invention, destiné à commander l'incidence des pales d'un rotor sustentateur d'hélicoptère, qui est solidaire d'un arbre rotor et entraîné en rotation par ce dernier autour d'un axe de rotation du rotor, et du type comprenant:
— deux plateaux cycliques, disposés autour de l'arbre rotor et dont l'un est un plateau tournant, entraîné en rotation avec l'arbre rotor, et monté en rotation par au moins un roulement à billes sur l'autre plateau, non tournant, immobilisé en rotation autour de l'axe du rotor,
— un mécanisme de guidage en translation axiale et en déplacement angulaire du plateau non tournant par rapport à l'arbre rotor, et
— un mécanisme d'entraînement en rotation du plateau tournant et d'immobilisation en rotation du plateau non tournant, comportant au moins un organe articulé d'une part sur le plateau tournant et d'autre part sur l'arbre rotor, et au moins un organe articulé d'une part sur le plateau non tournant et d'autre part sur un élément de structure de l'hélicoptère,

le plateau tournant suivant tous les mouvements du plateau non tournant, attaqué par des commandes pilotes, et les transmettant à des leviers de commande de l'incidence des pales par l'intermédiaire de biellettes de commande de pas, se caractérise en ce que l'ensemble des deux mécanismes est constitué par deux jeux de lames souples, qui s'étendent chacune sensiblement radialement par rapport à l'axe du rotor, et dont chacune est cintrée dans un plan passant par l'axe du rotor en présentant sa concavité vers les plateaux, le premier jeu de lames comportant au moins une lame présentant une raideur transversale qui lui permet, d'une part, d'entraîner en rotation le plateau tournant sur lequel chacune des lames du premier jeu est articulée par son extrémité radiale externe, tandis que son extrémité radiale interne est articulée sur l'arbre rotor en un point fixe de ce dernier situé au-dessus du plateau tournant et, d'autre part, d'assurer le centrage des plateaux par rapport à l'arbre rotor, chaque lame du premier jeu présentant également une flexibilité longitudinale qui, associée aux rotations de ses extrémités articulées, lui permet de suivre les mouvements de translation et de basculement qui sont donnés aux plateaux par les commandes pilotes, et le second jeu de lames comportant au moins une lame présentant, d'une part, une raideur transversale qui lui permet de retenir en rotation le plateau non tournant, sur lequel chaque lame du second jeu est articulée par son extrémité radiale externe, tandis que son extrémité radiale interne est articulée sur l'élément de structure de l'hélicoptère en un point fixe de ce dernier situé sous le plateau non tournant et, d'autre part, une flexibilité longitudinale qui, associée aux rotations de ses extrémités articulées, lui permet de suivre les mouvements de translation et de basculement qui sont donnés au plateau non tournant par les commandes pilotes.

Ainsi, dans le dispositif selon l'invention, d'une part, le mécanisme de guidage et d'articulation des plateaux, constitué dans l'état de la technique le plus classique par une rotule coulissante et, d'autre part, le mécanisme d'entraînement du plateau tournant et d'immobilisation du plateau non tournant, constitué dans l'état de la technique le plus classique par des compas articulés, sont remplacés dans leur ensemble et pour remplir les mêmes fonctions par les deux jeux de lame souples et cintrées.

Dans une réalisation préférée, le premier jeu de lames comporte trois lames réparties autour de l'arbre rotor, alors que le second jeu ne comporte qu'une seule lame. Mais la disposition des deux jeux de lames, par rapport aux plateaux, peut être inversée, relativement à la réalisation précédente, et, dans cette disposition inversée, le premier jeu de lames ne comporte qu'une seule lame, alors que le second jeu comporte trois lames réparties autour de l'arbre rotor.

Avantageusement, chaque lame souple présente, à son extrémité radiale interne, une douille par laquelle la lame est montée pivotante autour d'un axe perpendiculaire à l'axe du rotor et monté sur l'arbre rotor ou sur l'élément de structure de l'hélicoptère, selon que la lame appartient au premier ou au second jeu de lames, tandis qu'à son extrémité radiale externe, chaque lame souple présente une rotule par laquelle la lame est articulée sur le plateau tournant ou non tournant, selon que la lame appartient au premier ou au second jeu de lames. La rotule peut être d'une structure classique, métallique et lisse, mais elle peut également avoir une structure lamifiée.

Afin de loger la douille ou la rotule, et de préférence les deux, chaque lame présente une chape à l'une au moins de ses deux extrémités, mais de préférence aux deux. Chaque lame souple de l'un au moins des deux jeux peut être métallique, mais de préférence chaque lame souple de l'un au moins des deux jeux de lames et, de préférence des deux jeux, est une lame stratifiée, constituée d'un empilement de nappes ou tissus, croisés ou non de fibres à haute résistance mécanique enrobées d'une résine synthétique. Dans ce dernier cas, et lorsque la douille et/ou la rotule est ou sont logées dans une chape d'extrémité de la lame, l'ossature de la chape est constituée de nappes de tissu de renfort intercalées avec des nappes de la structure stratifiée de la lame entre ses deux extrémités. Chaque lame stratifiée peut être avantageusement moulée en forme à partir de nappes de tissu disposées directement sur la bague et/ou la rotule d'articulation.

Afin de faciliter la liaison des lames à l'arbre rotor, ce dernier présente, au niveau du point fixe d'articulation de chaque lame du premier jeu sur l'arbre rotor, un renfort en forme de chape à deux branches en saillie radiale vers l'extérieur, et entre les deux branches de laquelle est encastré un axe d'articulation de l'extrémité radiale interne de la lame correspondante.

Dans un premier exemple de réalisation, les biellettes de commande du pas et les commandes pilotes sont articulées respectivement sur le plateau tournant et sur le plateau non tournant, autour d'axes situés respectivement dans un plan transversal du plateau tournant et dans un plan transversal du plateau non tournant, et la rotule de l'extrémité radiale externe de la ou des lames souples d'au moins un jeu de lames est articulée sur le plateau tournant ou non tournant, autour d'un axe situé d'une part radialement à l'intérieur des axes d'articulation des biellettes ou des commandes pilotes sur le plateau correspondant et, d'autre part, respectivement au-dessus dudit plan transversal du plateau tournant ou au-dessous dudit plan transversal du plateau non tournant.

Mais il est également possible que, selon un second exemple de réalisation, la rotule d'articulation de l'extrémité radiale externe de la ou des lames souples d'au moins un jeu de lames soit centrée sur un axe d'articulation d'une biellette de commande du pas ou d'une commande pilote respectivement sur le plateau tournant ou sur le plateau non tournant.

Il est clair que de telles lames souples et cintrées du dispositif de commande selon l'invention peuvent être montées en lieu et place des compas articulés d'ensembles de commande classiques à plateaux cycliques.

Mais, de préférence, ces lames remplacent également la rotule coulissante et le guide-plateau de ces ensembles de commande classiques, et dans une forme de réalisation particulièrement avantageuse pour un rotor quadripale, le premier jeu de lames souples comprend deux paires de lames, les deux lames de chaque paire s'étendant dans une même direction radiale mais de part et d'autre de l'arbre rotor et perpendiculairement à la direction radiale des lames de l'autre paire, les lames s'articulant par leur extrémité radiale externe aux quatre coins du plateau tournant, de forme en plan sensiblement carrée, et qui présente un évidement central circulaire de logement d'un manchon entourant sans contact l'arbre rotor et solidaire en rotation de la bague interne du roulement à billes par lequel le plateau tournant est monté en rotation sur le plateau non tournant. Le second jeu de lames souples comprend une unique lame articulée par son extrémité radiale externe sur un sommet du plateau non tournant, de forme en plan sensiblement triangulaire, et sur les trois sommets duquel s'articulent également les commandes pilotes, le plateau non tournant présentant un évidement central circulaire de logement de la bague externe du roulement à billes par lequel le tableau tournant est monté en rotation sur le plateau non tournant.

L'invention sera mieux comprise à l'aide d'exemples de réalisation décrits ci-après, à titre non limitatif, en référence aux dessins annexés, dans lesquels:
— la figure 1 est une vue schématique en coupe verticale et axiale d'un moyeu rotor d'hélicoptère équipé d'un premier exemple de dispositif de commande selon l'invention,
— la figure 2 est une vue en plan de la partie centrale du dispositif de commande équipant le moyeu rotor de la figure 1, et
— la figure 3 est une vue partielle analogue à la figure 1 d'un moyeu rotor équipé d'un second exemple de dispositif de commande selon l'invention.

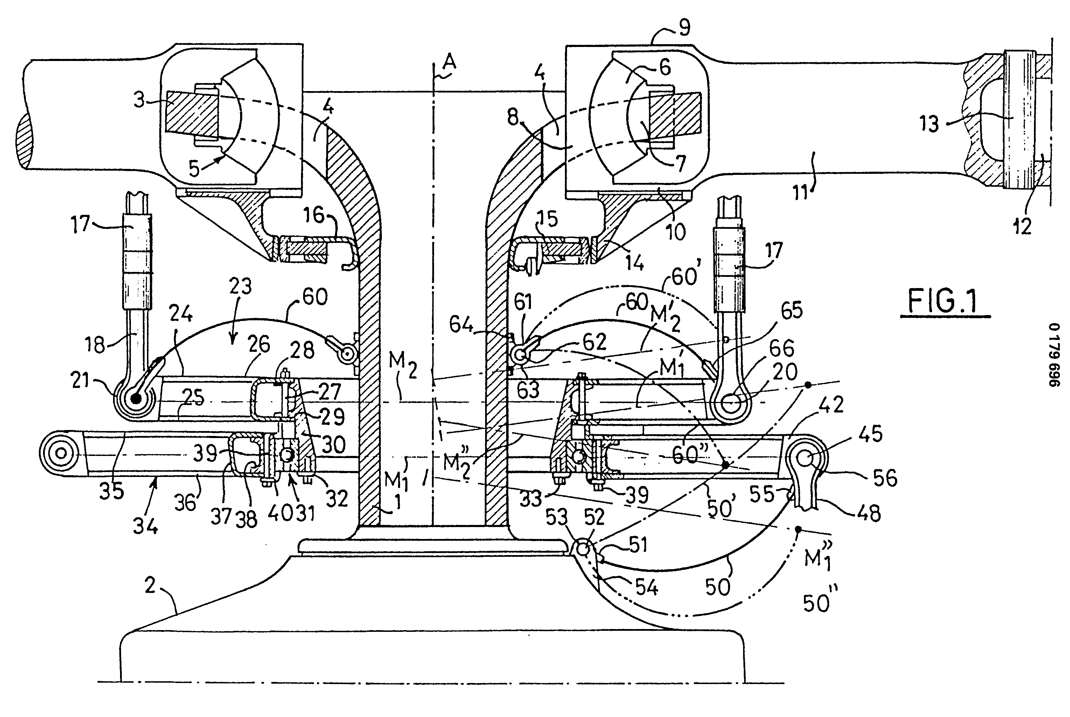

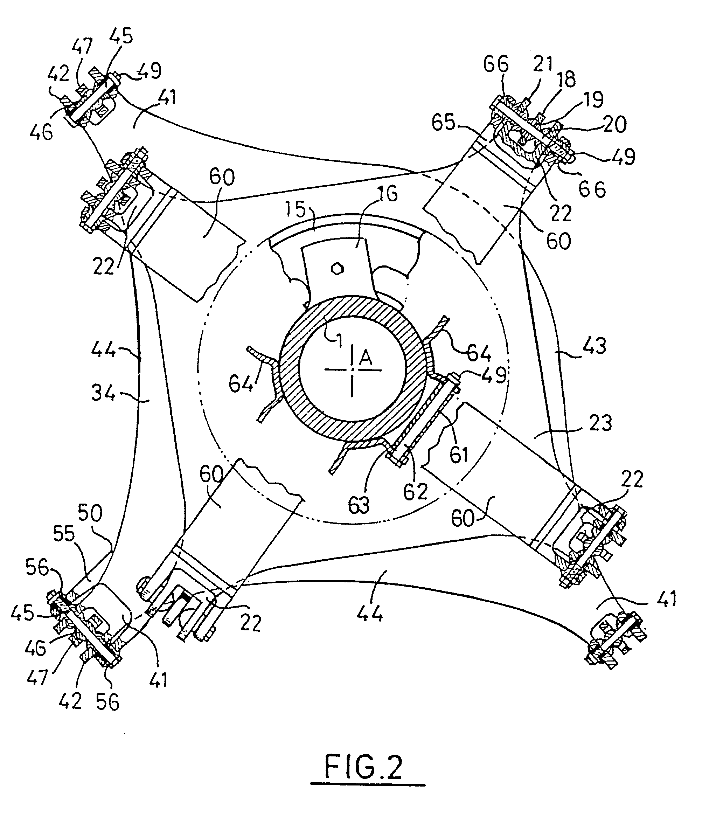

Le rotor d'hélicoptère représenté sur les figures 1 et 2 est d'un type bien connu, comprenant un arbre rotor 1 tubulaire, de forme générale cylindrique de section circulaire, entraîné en rotation, autour de son axe A, qui est l'axe de rotation du rotor, par la boîte de transmission principale, dont on a seulement représenté la partie supérieure du carter 2, et à laquelle l'arbre rotor 1 est accouplé par son extrémité inférieure, à l'intérieur du carter 2. A son extrémité supérieure, l'arbre rotor 1 est solidaire d'un moyeu 3, ayant sensiblement la forme d'un plateau radial circulaire ou polygonal à côtés convexes, qui présente, dans sa partie périphérique, autant d'ouvertures axiales 4 que le rotor comporte de pales, par exemple quatre dans cet exemple. Dans chacune des ouvertures 4 est logée une butée sphérique lamifiée 5, d'un type bien connu, constituée d'un empilement alterné 6 de coupelles rigides et de lamelles d'un matériau visco-élastique en forme de calottes sphériques centrées vers l'extérieur, l'empilement 6 étant solidarisé par sa face radiale externe et concave sur la face radiale interne et convexe d'une armature rigide radiale externe 7 chevauchant le bord radial externe de l'ouverture 4 correspondante et fixée sur la partie radiale externe du moyeu 3. Par sa face radiale interne et convexe, l'empilement 6 est solidaire de la face radiale externe concave d'une armature radiale interne 8, traversant sensiblement axialement l'ouverture 4 correspondante, et constituant une entretoise entre la branche supérieure 9 et la branche inférieure 10 d'une chape de l'extrémité radiale interne d'un manchon de pale 11, dont l'extrémité radiale externe est également conformée en chape à deux branches 12 dans laquelle le pied d'une pale du rotor est fixé par deux branches telles que 13. La branche inférieure 10 de la chape interne du manchon 11 porte une butée 14, coopérant, de manière connue, avec un anneau réciproque 15 monté mobile radialement dans un support annulaire 16 fixé autour de l'arbre rotor 1, afin de limiter les mouvements vers le bas du manchon 11 et de la pale correspondante, aux vitesses faibles ou nulle de rotation du rotor. Chaque manchon 11 porte également, de manière bien connue, un levier de commande (non représenté) de l'incidence de la pale correspondante, et l'extrémité libre de ce levier est articulée sur l'extrémité supérieure d'une biellette 17 de commande du pas de cette pale, cette biellette étant de longueur réglable afin de permettre le réglage aérodynamique du rotor. L'extrémité inférieure de la biellette 17 est conformée en embout 18 à rotule 19, par laquelle la biellette 17 est articulée sur la partie centrale d'un axe 20 perpendiculaire à l'axe A du rotor, et monté sur une chape 21 dont les deux branches s'étendent radialement vers l'extérieur et parallèlement à l'axe A, et qui est présentée par une partie 22 en forme de coin élargi d'un plateau cyclique tournant 23 ayant, en plan, une forme carrée. Le plateau tournant 23 présente un évidement central circulaire grâce auquel il entoure sans contact l'arbre rotor 1 et, comme représenté sur la figure 1, ce plateau 23 est essentiellement constitué de deux voiles radiaux 24 et 25 superposés et reliés l'un à l'autre par les chapes 21, formant des entretoises aux niveaux de leurs quatre coins, ainsi que par des entretoises en U 26 qui relient les bords internes des voiles 24 et 25, et sont fixées avec ces derniers, par une couronne d'ensemble vis-écrou 27, sur deux collerettes radiales externes 28 et 29 de la partie supérieure d'un manchon 30, à passage central tronconique dont la petite base est tournée vers le bas, et qui entoure sans contact l'arbre rotor 1. La partie inférieure de ce manchon 30 présente, dans sa face externe, un logement circulaire dans lequel la bague interne d'un roulement à billes 31 est solidarisée en rotation au manchon 30 par une couronne 32, formant une butée radiale interne pour cette bague interne du rouleau 31, et appliquée contre la base du manchon 30 par des vis 33. La bague externe du roulement 31 est solidaire en rotation d'un plateau cyclique non tournant 34, qui s'étend sous le plateau tournant 23. Sensiblement comme ce dernier, le plateau non tournant 34, qui entoure sans contact l'arbre rotor 1, est essentiellement constitué de deux voiles radiaux 35 et 36, ayant une même forme en plan sensiblement triangulaire qui sera précisée ci-dessous, avec un évidement central circulaire, et dont les bords radiaux internes sont reliés par des entretoises en U 37. Ces dernières et les bords internes des voiles 35 et 36 sont fixés sur une entretoise annulaire 38, rapportée entre les bords internes des voiles 35 et 36, par des ensembles vis-écrou 39 qui appliquent également contre le voile inférieur 36 et contre la bague externe du roulement 31 une couronne 40 formant la butée radiale externe du roulement 31. Les deux voiles 35 et 36 ont la forme en plan représentée sur la figure 2, et qui est sensiblement celle d'un triangle dont les parties formant les sommets 41 sont élargies et conformées en chapes 42 à deux branches radiales dirigées vers l'extérieur et parallèles à l'axe A, et qui constituent des entretoises reliant les extrémités radiales externes des voiles 35 et 36. Deux des trois sommets 41 sont diamétralement opposés par rapport à l'axe A, et leur côté adjacent 43 est convexe et arrondi radialement vers l'extérieur. Le troisième sommet 41 est calé à 90° par rapport aux deux autres et ses deux côtés adjacents 44 sont concaves et légèrement arrondis radialement vers l'intérieur. Un axe 45, perpendiculaire à l'axe A, est monté sur chaque chape 42, et sur cet axe 45 s'articule la rotule 46 d'un embout 47 de l'extrémité supérieure de l'une de trois bielles de commande 48, dont une seule est partiellement représentée sur la moitié de droite de la figure 1, et qui constituent les commandes pilotes attaquant le plateau non tournant 34 en trois points calés à 90°. De manière bien connue, les trois bielles de commande 48 entraînent le plateau non tournant 34 d'une part en translation axiale, parallèlement à l'axe A, pour commander une variation collective de l'incidence des pales du rotor et, d'autre part, en oscillation par rapport à l'axe A pour commander une variation cyclique de l'incidence des pales, et le plateau tournant 23, monté en rotation sur le plateau non tournant 34 par le roulement à billes 31 et le manchon 30, suit les mouvements du plateau non tournant 34, et les transmet par les biellettes 17 aux leviers de commande de pas solidaires des manchons de pales 11.

Le plateau non tournant 34 est immobilisé en rotation autour de l'arbre rotor 1 par une unique lame souple 50, ayant une forme rectangulaire lorsqu'elle n'est pas déformée, et dont le plan médian longitudinal s'étend sensiblement radialement. La lame souple 50 est cintrée dans un plan passant par l'axe A du rotor de manière à présenter sa concavité vers les plateaux 23 et 34, entre l'articulation de son extrémité radiale interne sur la partie supérieure du carter 2, sensiblement en dessous du bord radial interne du plateau 34, et l'articulation de son extrémité radiale externe sur l'axe 45 monté dans la chape 42 du coin 41 qui est opposé au côté 43 bombé radialement vers l'extérieur sur le plateau non tournant 34. L'extrémité interne de la lame 50 est conformée en chape 51 logeant une douille en acier 52, par laquelle la lame 50 est montée pivotante autour d'un axe 53, perpendiculaire à l'axe A et au plan radial dans lequel est contenu le plan longitudinal et médian de la lame 50. Cet axe 53 est retenu entre les deux branches d'une chape 54 en saillie axiale vers le haut sur la partie supérieure du carter fixe 2. L'extrémité externe de la lame 50 est également conformée en chape 55, dont les deux branches, parallèles aux branches de la chape 42 du plateau 34 et à l'extérieur de celles-ci, portent chacune l'une des deux portions 56 en forme de calottes sphériques d'une rotule, ces deux portions de rotule 56 étant montées tourillonnantes sur l'axe 45 et centrées sur le milieu de cet axe 45, c'est-à-dire au centre de la rotule 46 de l'embout 47 de l'extrémité supérieure de la bielle de commande 48 correspondante.

La lame 50 présente une raideur transversale telle qu'elle retient le plateau 34 par rapport au carter fixe 2 et l'empêche de tourner autour de l'axe A. De plus, sa flexibilité longitudinale et ses articulations d'extrémité lui permettent de suivre les mouvements de translation et de basculement donnés au plateau 34 par les trois bielles de commande 48.

Le plateau tournant 23 est entraîné en rotation avec l'arbre rotor 1 par quatre lames souples 60, analogues à la lame 50, de forme également rectangulaire à l'état non déformé, et groupées en deux paires de lames 60 s'étendant de part et d'autre de l'arbre rotor 1, et telles que leur plan médian longitudinal soit situé sensiblement dans le même plan radial passant par l'axe A et perpendiculaire au plan médian longitudinal des deux autres lames 60. Chacune des lames 60 est cintrée dans un plan passant par l'axe A, de telle sorte que sa concavité soit tournée vers les plateaux 23 et 34, entre l'articulation de son extrémité radiale interne sur l'arbre rotor 1, en un point fixe de la périphérie de ce dernier qui est situé au-dessus du plateau tournant 23, et l'articulation de son extrémité radiale externe sur l'axe 20 de la chape 21 de l'un des quatre coins 22 du plateau tournant 23. L'extrémité interne de chaque lame 60 enveloppe une douille 61 en acier, qui est engagée et retenue pivotante sur un axe 62, perpendiculaire à l'axe A et au plan médian longitudinal de la lame 60, entre les deux branches 63, parallèles à l'axe A, d'une chape en saillie radiale vers l'extérieur de l'arbre rotor 1 et qui est formée par les deux parties en regard l'une de l'autre de deux renforts en U 64 adjacents l'un à l'autre parmi les quatre renforts qui sont régulièrement répartis sur le pourtour de l'arbre rotor 1 et fixés à la face latérale externe de ce dernier. L'extrémité externe de chaque lame 60 est tout à fait semblable à celle de la lame 50: elle est conformée en chape 65 dont les deux branches, parallèles aux branches de la chape 21 du coin 22 correspondant du plateau tournant 23, et à l'extérieur de celles-ci, portent chacune l'une des deux portions 66 en forme de calottes sphériques d'une rotule, ces deux portions de rotule 66 étant montées tourillonnantes sur l'axe 20 et centrées sur le milieu de celui-ci, c'est-à-dire sur le centre de la rotule 19 de l'embout 18 de la biellette de commande du pas 17 correspondante.

Les quatre lames 60 présentent une raideur transversale telle qu'elles entraînent le plateau tournant 23 en rotation avec l'arbre rotor 1, tandis que leur flexibilité longitudinale et leurs articulations d'extrémité leur permettent de suivre les mouvements de translation axiale et de basculement des plateaux 23 et 34. De plus, la raideur transversale des lames 60 est suffisante pour que ces lames assurent également le centrage des plateaux 23 et 34 sur l'axe A, autour de l'arbre rotor 1. L'ensemble des lames 60 assure ainsi le guidage des plateaux 23 et 34 dans leurs mouvements axiaux et de pivotement par rapport à l'arbre rotor 1, ainsi que l'entraînement du plateau 23, tandis que le plateau 34 est immobilisé en rotation par la lame 50 de par sa raideur transversale. Sur la figure 1, on a désigné par $M_1$ et $M_2$ les plans médians transversaux (perpendiculaires à l'axe A) des plateaux 34 et 23 en position neutre des bielles de commande 48. Si ces dernières sont manœuvrées de manière à basculer vers le haut la partie de droite des plateaux 23 et 34 sur la figure 1, les positions des plans médians sont indiquées en $M'_1$ et $M'_2$, et les lames 50 et 60 occupent respectivement les positions indiquées en 50' (moins fléchie) et 60' (plus fléchies). Par contre, si les bielles 48 font pivoter la partie de droite des plateaux 23 et 34 vers le bas, comme indiqué en $M''_1$ et $M''_2$, les lames 50 et 60 occupent les positions 50'' (plus fléchie) et 60'' (moins fléchies). Dans cette réalisation, il faut noter que les axes 20 et 45 d'articulation des biellettes 17 et des lames 60 sur le plateau tournant 23 et des bielles 48 et de la lame 50 sur le plateau non tournant 34 sont contenus dans les plans médians $M_2$ et $M_1$. Si les mouvements de translation et de basculement des plateaux cycliques 23 et 34 peuvent être suivis par les lames 50 et 60 qui se déforment, c'est en raison, d'une part, de la flexibilité de ces lames, favorisée par leur forme cintrée et, d'autre part, de la possibilité qui leur est donnée de pivoter autour des axes d'articulation de leurs extrémités. Les lames sollicitées en torsion lors des basculements des plateaux 23 et 34 ne s'opposent pas à ces basculements du fait de la rotule d'articulation à l'extrémité radiale externe des lames 50 et 60.

Les lames 50 et 60 peuvent être métalliques ou réalisées en matériaux composites et présenter une structure stratifiée. Dans ce dernier cas, elles sont moulées en forme par empilement de nappes ou tissus croisés ou non de fibres à haute résistance mécanique enrobées dans une résine synthétique, la disposition des nappes étant choisie pour donner aux lames 50 et 60 les caractéristiques de raideur transversale et de flexibilité longitudinale souhaitées. Ces nappes ou tissus peuvent être disposés directement sur les douilles 52 et 61 de l'extrémité interne des lames 50 et 60, et des nappes ou tissus de renfort peuvent être intercalés, aux niveaux des extrémités des lames 50 et 60, avec les nappes constituant la structure stratifiée entre les deux extrémités, afin de former l'ossature des chapes dans lesquelles sont logées les douilles 52 et 61 et les portions de rotule 56 et 66. Ces dernières peuvent avoir une structure lamifiée.

Dans la réalisation décrite ci-dessus en référence aux figures 1 et 2, les axes 20, 45, 53 et 62 sont constitués par des goujons dont l'extrémité de la tige est filetée, et sur laquelle est vissé un écrou 49, de préférence retenu par une goupille, afin de maintenir le goujon en position convenable sur la chape correspondante.

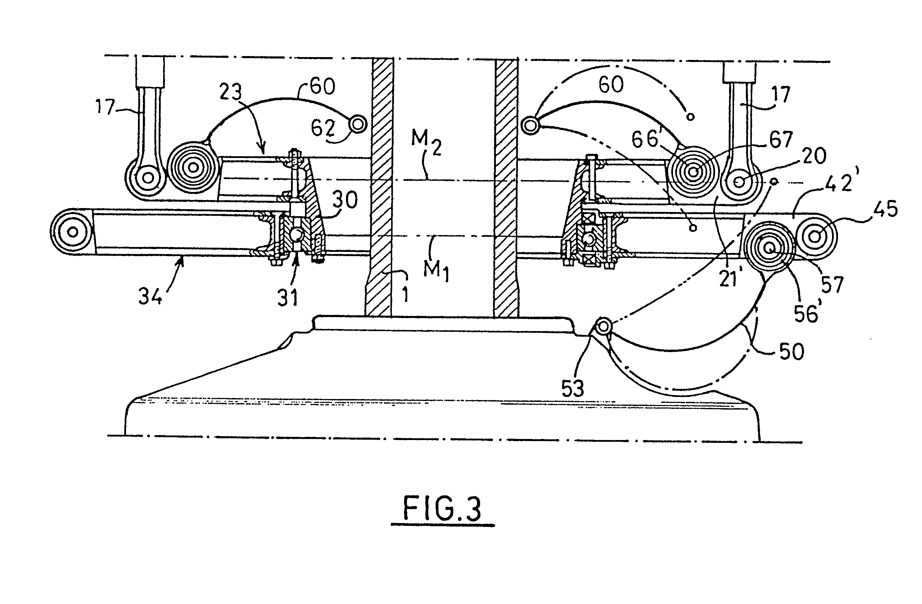

Le second exemple de dispositif de commande de l'incidence des pales, comportant des lames souples, et qui est représenté sur la figure 3, présente de nombreuses caractéristiques communes avec l'exemple que l'on vient de décrire en référence aux figures 1 et 2. De ce fait, les mêmes références numériques, éventuellement affectées d'un symbole prime, sont utilisées pour désigner les éléments analogues.

La différence essentielle présentée par ce second exemple par rapport au premier est que les rotules 56' et 66' de l'extrémité radiale externe respectivement de la lame souple inférieure 50 et des lames souples supérieures 60 ne sont pas montées sur l'axe 45 et sur les axes 20 par lesquels une bielle pilote et les biellettes de commande du pas 17 sont articulées respectivement sur le plateau inférieur non tournant 34 et sur le plateau supérieur tournant 23, mais la rotule 56', de structure lamifiée, articule l'extrémité externe de la lame 50 autour d'un axe 57, monté sur la chape 42', qui est double, au niveau du sommet correspondant du plateau non tournant 34, et cet axe 57 est parallèle à l'axe 45 d'articulation de la bielle de commande correspondante, mais est situé radialement à l'intérieur de l'axe 45 et sous le plan médian $M_1$ de ce plateau 34 dans lequel est situé l'axe 45, comme cela est clairement représenté sur la figure 3.

De manière sensiblement symétrique, une rotule 66', de structure lamifiée, articule l'extrémité externe de chaque lame 60 autour d'un axe 67 monté sur la chape double 21', au niveau du coin correspondant du plateau tournant 23, et cet axe 67 est parallèle à l'axe 20 d'articulation de la biellette de commande du pas 17 correspondante sur cette chape 21', mais en étant situé radialement à l'intérieur de l'axe 20 et au-dessus du plan médian $M_2$ du plateau tournant 23 dans lequel l'axe 20 est situé.

Pour le reste, le dispositif est pratiquement identique à celui des figures 1 et 2, et il fonctionne exactement de la même manière.

## Revendications

1. Dispositif à plateaux cycliques (23, 34) de commande de l'incidence des pales d'un rotor sustentateur d'hélicoptère qui est solidaire d'un arbre rotor (1) et entraîné en rotation par ce dernier autour d'un axe (A) de rotation du rotor, le dispositif comprenant:
— deux plateaux cycliques (23, 34) disposés autour de l'arbre rotor (1) et dont l'un est un plateau tournant (23) entraîné en rotation avec l'arbre rotor (1) et monté en rotation par au moins un roulement à billes (31) sur l'autre plateau (34), non tournant, immobilisé en rotation autour de l'axe (A) du rotor,
— un mécanisme de guidage en translation axiale et en déplacement angulaire du plateau non tournant (34) par rapport à l'arbre rotor (1), et
— un mécanisme d'entraînement en rotation du plateau tournant (23) et d'immobilisation en rotation du plateau non tournant (34), comportant au moins un organe (60) articulé d'une part sur le plateau tournant (23) et d'autre part sur l'arbre rotor (1), et au moins un organe (50) articulé d'une part sur le plateau non tournant (34) et d'autre part sur un élément de structure (2) de l'hélicoptère, le plateau tournant (23) suivant tous les mouvements du plateau non tournant (34), attaqué par des commandes pilotes (48), et les transmettant à des leviers de commande de l'incidence des pales par l'intermédiaire de biellettes (17) de commande du pas, caractérisé en ce que l'ensemble des deux mécanismes est constitué par deux jeux de lames souples (50, 60), qui s'étendent chacune sensiblement radialement par rapport à l'axe (A) du rotor, et dont chacune est cintrée dans un plan passant par l'axe (A) du rotor en présentant sa concavité vers les plateaux (23, 34), le premier jeu de lames comportant au moins une lame (60) présentant une raideur transversale qui lui permet, d'une part, d'entraîner en rotation le plateau tournant (23) sur lequel chacune des lames du premier jeu est articulée par son extrémité radiale externe, tandis que son extrémité radiale interne est articulée sur l'arbre rotor en un point fixe de ce dernier situé au-dessus du plateau tournant (23) et, d'autre part, d'assurer le centrage des plateaux (23, 34) par rapport à l'arbre rotor (1), chaque lame du premier jeu présentant également une flexibilité longitudinale qui, associée aux rotations de ces extrémités articulées, lui permet de suivre les mouvements de translation et de basculement qui sont donnés aux plateaux (23, 34) par les commandes pilotes, et le second jeu de lames comportant au moins une lame (50) présentant, d'une part, une raideur transversale qui lui permet de retenir en rotation le plateau non tournant (34), sur lequel chaque lame (50) du second jeu est articulée par son extrémité radiale externe, tandis que son extrémité radiale interne est articulée sur l'élément de structure (2) de l'hélicoptère en un point fixe de ce dernier situé sous le plateau non tournant (34) et, d'autre part, une flexibilité longitudinale qui, associée aux rotations de ses extrémités articulées, lui permet de suivre les mouvements de translation et de basculement qui sont donnés au plateau non tournant (34) par les commandes pilotes.

2. Dispositif selon la revendication 1, caractérisé en ce que le premier jeu de lames comporte trois lames (60) souples et cintrées, régulièrement réparties autour de l'arbre rotor (1), alors que le second jeu de lames comporte une seule lame (50) souple et cintrée.

3. Dispositif selon la revendication 1, caractérisé en ce que le premier jeu de lames comporte une seule lame (60) souple et cintrée, alors que le second jeu de lames comporte trois lames (50) souples et cintrées, et régulièrement réparties autour de l'arbre rotor (1).

4. Dispositif selon l'une des revendications 1, 2, 3, caractérisé en ce que chaque lame souple (50, 60) présente, à son extrémité radiale interne, une douille (52, 61) par laquelle la lame est montée pivotante autour d'un axe (53, 62) perpendiculaire à l'axe (A) du rotor et monté sur l'arbre rotor (1) ou sur l'élément de structure (2) de l'hélicoptère, selon que la lame appartient au premier ou au second jeu de lames.

5. Dispositif selon l'une des revendications 1 à 4, caractérisé en ce que chaque lame souple (50, 60) présente, à son extrémité radiale externe, une rotule (56, 66) par laquelle la lame est articulée sur le plateau tournant (23) ou non tournant (34) selon que la lame appartient au premier ou au second jeu de lames.

6. Dispositif selon la revendication 5, caractérisé en ce que la rotule (56', 66') a une structure lamifiée.

7. Dispositif selon l'une des revendications 4 à 6, caractérisé en ce que chaque lame (50, 60) présente, à l'une au moins de ses extrémités, une chape (55, 65) destinée à loger la douille (52, 61) ou la rotule (56, 66) d'articulation correspondante.

8. Dispositif selon l'une des revendications 1 à 7, caractérisé en ce que chaque lame souple (50, 60) de l'un au moins des deux jeux de lames est métallique.

9. Dispositif selon l'une des revendications 1 à 8, caractérisé en ce que chaque lame souple (50, 60) de l'un au moins des deux jeux de lames est une lame stratifiée, constituée d'un empilement de nappes ou tissus croisés ou non de fibres à haute résistance mécanique enrobées d'une résine synthétique.

10. Dispositif selon la revendication 9, telle que rattachée à la revendication 7, caractérisé en ce que l'ossature de la chape (65, 55) est constituée de nappes de tissu de renfort intercalées avec des nappes de la structure stratifiée de la lame (50, 60) entre ses deux extrémités.

11. Dispositif selon la revendication 10, caractérisé en ce que chaque lame stratifiée est moulée en forme à partir de nappes de tissu disposées directement sur la douille (52, 61) et/ou la rotule d'articulation (56, 66).

12. Dispositif selon l'une des revendications 1 à 11, caractérisé en ce qu'au niveau du point fixe d'articulation de chaque lame (60) du premier jeu sur l'arbre rotor (1), ce dernier présente un renfort (64) en forme de chape à deux branches (63) en saillie radiale vers l'extérieur, et entre lesquelles est encastré un axe d'articulation (61) de l'extrémité radiale de la lame (60) correspondante.

13. Dispositif selon l'une des revendications 6 à 12, telle que rattachée à la revendication 3, caractérisé en ce que les biellettes de commande du pas (17) et les commandes pilotes (48) sont articulées respectivement sur le plateau tournant (23) et sur le plateau non tournant (34) autour d'axes (20, 45) situés respectivement dans un plan transversal $(M_2)$ du plateau tournant (23) et dans un plan transversal $(M_1)$ du plateau non tournant (34), et la rotule (56', 66') de l'extrémité radiale externe de la ou des lames (50, 60) souples d'au moins un jeu de lames est articulée sur le plateau tournant (23) ou non tournant (34), autour d'un axe (57, 67) situé, d'une part, radialement à l'intérieur des axes d'articulation (20, 45) des biellettes (17) ou des commandes pilotes (48) sur le plateau correspondant (23, 34) et, d'autre part, respectivement au-dessus dudit plan transversal $(M_2)$ du plateau tournant (23) ou au-dessous dudit plan transversal $(M_1)$ du plateau non tournant (34).

14. Dispositif selon l'une des revendications 6 à 12, telle que rattachée à la revendication 3, caractérisé en ce que la rotule d'articulation (56, 66) de l'extrémité radiale externe de la ou des lames souples (50, 60) d'au moins un jeu de lames est centrée sur un axe d'articulation (20, 45) d'une biellette de commande du pas (17) ou d'une commande pilote (48) respectivement sur le plateau tournant (23) ou sur le plateau non tournant (34).

15. Dispositif selon l'une des revendications 1 à 14, caractérisé en ce que le premier jeu de lames souples (60) comprend deux paires de lames, les deux lames (60) de chaque paire s'étendant dans une même direction radiale mais de part et d'autre de l'arbre rotor (1) et perpendiculairement à la direction radiale des lames (60) de l'autre paire, les lames s'articulant par leur extrémité radiale externe aux quatre coins (22) du plateau tournant (23), de forme en plan sensiblement carrée, et qui présente un évidement central circulaire de logement d'un manchon (30) entourant sans contact l'arbre rotor (1) et solidaire en rotation de la bague interne du roulement à billes (31) par lequel le plateau tournant (23) est monté en rotation sur le plateau non tournant (34).

16. Dispositif selon l'une des revendications 1 à 15, caractérisé en ce que le second jeu de lame souple comprend une unique lame (50) articulée par son extrémité radiale externe sur un sommet (41) du plateau non tournant (34) de forme en plan sensiblement triangulaire, et sur les trois sommets (41) duquel s'articulent également les commandes pilotes (48), le plateau non tournant (34) présentant un évidement central circulaire de logement de la bague externe du roulement à billes (31) par lequel le plateau tournant (23) est monté en rotation sur le plateau non tournant (34).

## Patentansprüche

1. Schaufelanstellungsvorrichtung eines Hubschrauber-Auftriebsrotors, die kreisförmige Plateaus (23, 34) aufweist und die fest mit einer Rotorwelle (1) verbunden ist und von dieser um die Drehachse (A) des Rotors in Drehung versetzt wird, wobei die Schaufelanstellungsvorrichtung umfasst:
— zwei kreisförmige Plateaus (23, 34), die die Rotorwelle (1) umgeben und wovon eines ein umlaufendes Plateau (23) darstellt, das mit der Rotorwelle (1) in Drehung versetzt wird und mittels mindestens einem Kugellager (31) auf dem anderen, nicht-umlaufenden Plateau (34) befestigt ist, das die Drehachse (A) des Rotors in nicht drehbarer Weise umgibt,
— eine Führungsvorrichtung für eine axiale Translation und Winkelbewegung des gegenüber der Rotorwelle (1) nicht-umlaufenden Plateaus (34), und

— eine Vorrichtung zum Drehantrieb des umlaufenden Plateaus (23) und zur Halterung des nicht-umlaufenden Plateaus (34) gegenüber einer Drehung, die mindestens ein Element (60) aufweist, das einerseits auf dem umlaufenden Plateau (23) gelenkig befestigt ist und andererseits auf der Rotorwelle (1), sowie mindestens ein Element (50), das einerseits auf dem nicht-umlaufenden Plateau (34) gelenkig befestigt ist und andererseits auf einem Bauelement (2) des Hubschraubers, wobei das umlaufende Plateau (23) allen Bewegungen des nicht-umlaufenden Plateaus (34) folgt, das durch Steuerstangen (48) beeinflusst wird, und die Bewegungen unter Zwischenschaltung von Anstellungssteuerungsstangen (17) auf Steuerhebel für die Schaufelanstellung überträgt, dadurch gekennzeichnet, dass die Gesamtanordnung der beiden Vorrichtungen aus zwei Sätzen biegsamer Lamellen (50, 60) besteht, von denen sich jeder im wesentlichen radial zur Drehachse (A) des Rotors erstreckt und von denen jeder in einer Ebene gekrümmt ist, die durch die Drehachse (A) des Rotors tritt, wobei die konkave Seite der Krümmung gegen die Plateaus (23, 34) gerichtet ist, der erste Satz der Lamellen mindestens eine Lamelle (60) umfasst, das eine Quersteifigkeit aufweist, die es ihr einerseits gestattet, das umlaufende Plateau (23) anzutreiben, auf welchem jede Lamelle des ersten Satzes mittels ihres radial äusseren Endes angelenkt ist, während ihr radial inneres Ende an einem festliegenden Punkt der Rotorwelle angelenkt ist, der sich oberhalb des umlaufenden Plateaus (23) befindet, und andererseits die Zentrierung der Plateaus (23, 34) gegenüber der Rotorwelle (1) zu gewährleisten, jede Lamelle des ersten Satzes gleichermassen eine Biegsamkeit in Längsrichtung aufweist, die es ihr in Verbindung mit den Drehbewegungen ihrer angelenkten Enden gestattet, den Translationsbewegungen und den Schwenkbewegungen zu folgen, die den Plateaus (23, 34) durch die Führungsstangen (48) erteilt werden, und der zweite Satz der Lamellen mindestens eine Lamelle (50) umfasst, die einerseits eine Quersteifigkeit aufweist, die es ihr gestattet, das nicht-umlaufende Plateau (34) an einer Drehung zu hindern, auf welchem jede Lamelle (50) des zweiten Satzes von Lamellen mittels ihres radial ausseren Endes angelenkt ist, während ihr radial inneres Ende auf einem Bauelement (2) des Hubschraubers an einem festliegenden Punkt desselben angelenkt ist, der unterhalb des nicht-umlaufenden Plateaus (34) liegt, und die Lamelle (50) andererseits eine Biegsamkeit in Längsrichtung aufweist, die es ihr in Verbindung mit den Drehbewegungen ihrer angelenkten Enden gestattet, den Translationsbewegungen und Schwenkbewegungen zu folgen, die dem nicht-umlaufenden Plateau (34) durch die Führungsstangen (48) erteilt werden.

2. Vorrichtung nach Anspruch 1, dadurch gekennzeichnet, dass der erste Satz Lamellen drei biegsame und gekrümmte Lamellen (60) aufweist, die regelmässig um die Rotorwelle (1) verteilt sind, während der zweite Satz Lamellen eine einzige biegsame Lamelle (50) aufweist.

3. Vorrichtung nach Anspruch 1, dadurch gekennzeichnet, dass der erste Satz Lamellen eine einzige biegsame und gekrümmte Lamelle (60) aufweist, während der zweite Satz Lamellen drei biegsame und gekrümmte Lamellen (50) aufweist, die regelmässig um die Rotorwelle (1) verteilt sind.

4. Vorrichtung nach einem der Ansprüche 1, 2 und 3, dadurch gekennzeichnet, dass jede biegsame Lamelle (50, 60) an ihrem radial inneren Ende eine Tülle (52, 61) aufweist, mittels welcher die Lamelle schwenkbar um eine Achse (53, 62) ist, die senkrecht zur Drehachse (A) des Rotors verläuft und die auf der Rotorwelle (1) oder auf einem Bauelement (2) des Hubschraubers befestigt ist, abhängig davon, ob die Lamelle zum ersten oder zum zweiten Satz Lamellen gehört.

5. Vorrichtung nach einem der Ansprüche 1 bis 4, dadurch gekennzeichnet, dass jede biegsame Lamelle (50, 60) an ihrem radial äusseren Ende ein Kugelgelenk (56, 66) aufweist, mittels welchem die Lamelle auf dem umlaufenden Plateau (23) oder auf dem nicht-umlaufenden Plateau (34) befestigt ist, abhängig davon, ob die Lamelle zum ersten oder zum zweiten Satz Lamellen gehört.

6. Vorrichtung nach Anspruch 5, dadurch gekennzeichnet, dass das Kugelgelenk (56', 66') einen laminierten Aufbau aufweist.

7. Vorrichtung nach einem der Ansprüche 4 bis 6, dadurch gekennzeichnet, dass jede Lamelle (50, 60) an zumindest einem ihrer Enden ein Gabelgelenk (55, 65) aufweist, das dazu dient, die Tülle (52, 61) oder das Kugelgelenk (56, 66) der zugehörigen Gelenkverbindung aufzunehmen.

8. Vorrichtung nach einem der Ansprüche 1 bis 7, dadurch gekennzeichnet, dass jede biegsame Lamelle (50, 60) von zumindest einem der beiden Sätze Lamellen metallisch ist.

9. Vorrichtung nach einem der Ansprüche 1 bis 8, dadurch gekennzeichnet, dass jede biegsame Lamelle (50, 60) von zumindest einem der beiden Sätze von Lamellen eine geschichtete Lamelle ist, die aus einer Schichtung von gekreuzten oder nicht-gekreuzten Flächen oder Stoffen ist, die aus Fasern hoher mechanischer Festigkeit bestehen, die von einem Kunstharz umhüllt sind.

10. Vorrichtung nach Anspruch 9, unter Rückbeziehung desselben auf Anspruch 7, dadurch gekennzeichnet, dass die Struktur des Gabelgelenkes (65, 55) aus Flächen aus Verstärkungsstoff besteht, die zwischen die Flächen der geschichteten Struktur der Lamelle (50, 60) zwischen deren beiden Enden eingeschoben sind.

11. Vorrichtung nach Anspruch 10, dadurch gekennzeichnet, dass jede geschichtete Lamelle, ausgehend von den Stoffflächen, die unmittelbar auf der Tülle (52, 61) und/oder dem Kugelgelenk (56, 66) aufgebracht sind, geformt ist.

12. Vorrichtung nach einem der Ansprüche 1 bis 11, dadurch gekennzeichnet, dass am Niveau des festliegenden Anlenkpunktes einer jeden Lamelle (60) des ersten Satzes Lamellen auf der Rotorwelle (1) letztere eine Verstärkung (64) in Gestalt eines Gabelgelenkes mit zwei Armen (63) aufweist, die radial nach aussen vorstehen und zwischen welchen eine Achse (61) zur gelenkigen Verbindung des radial inneren Endes der zugeordneten Lamelle (60) aufgenommen wird.

13. Vorrichtung nach einem der Ansprüche 6 bis 12, unter Rückbeziehung auf Anspruch 3, dadurch gekennzeichnet, dass die Anstellungsteuerungsstangen (17) und die Führungsstangen (48) jeweils auf dem umlaufenden Plateau (23) und dem nicht-umlaufenden Plateau (34) mittels Achsen (20, 45) angelenkt sind, die sich jeweils in einer Querebene ($M_2$) des umlaufenden Plateaus und in einer Querebene ($M_1$) des nicht-umlaufenden Plateaus (34) befinden, und dass das Kugelgelenk (56', 66') des radial äusseren Endes der biegsamen Lamelle oder der biegsamen Lamellen (50, 60) von zumindest einem Satz der Lamellen auf dem umlaufenden Plateau (23) oder auf dem nicht-umlaufenden Plateau (34) mittels einer Achse (57, 67) befestigt ist, die einerseits relativ zu den Schwenkachsen (20, 45) der Anstellungssteuerungsstangen (17) oder der Führungsstangen (48) auf dem zugeordneten Plateau (23, 34) radial innen liegt und andererseits jeweils oberhalb der Querebene ($M_2$) des umlaufenden Plateaus (23) oder unterhalb der Querebene ($M_1$) des nicht-umlaufenden Plateaus (34).

14. Vorrichtung nach einem der Ansprüche 6 bis 12, rückbezogen auf Anspruch 3, dadurch gekennzeichnet, dass das Kugelgelenk (56, 66) des radial äusseren Endes der biegsamen Lamelle oder der biegsamen Lamellen (50, 60) von zumindest einem Satz Lamellen auf einer Schwenkachse (20, 45) einer Anstellungssteuerstange (17) oder einer Führungsstange (48) jeweils auf dem umlaufenden Plateau (23) oder auf dem nicht-umlaufenden Plateau (34) zentriert ist.

15. Vorrichtung nach einem der Ansprüche 1 bis 14, dadurch gekennzeichnet, dass der erste Satz biegsamer Lamellen (60) zwei Paare Lamellen umfasst, dass sich die beiden Lamellen (60) eines jeden Paares in gleicher radialer Richtung aber beiderseits der Rotorwelle (1) und senkrecht zur Radialrichtung der Lamellen (60) des anderen Paares erstrecken, dass die Lamellen über ihr radial äusseres Ende an vier Ecken (22) des umlaufenden Plateaus (23) angelenkt sind, das einen im wesentlichen quadratischen Grundriss aufweist und ferner eine zentrale kreisförmige Ausnehmung zur Aufnahme einer Hülse (30), die die Rotorwelle (1) ohne Kontakt zur selben umgibt und drehfest mit dem inneren Lagerring des Kugellagers (31) verbunden ist, mittels welchem das umlaufende Plateau (23) drehbar auf dem nicht-umlaufenden Plateau (34) befestigt ist.

16. Vorrichtung nach einem der Ansprüche 1 bis 15, dadurch gekennzeichnet, dass der zweite Satz biegsamer Lamellen aus einem einzigen Federblatt (50) besteht, das über ihr radiales äusseres Ende auf einem Scheitelbereich (41) des nicht-umlaufenden Plateaus (34) mit in wesentlichen dreieckförmigem Grundriss angelenkt ist, und dass auf den drei Scheitelbereichen (41) des Plateaus (34) gleichermassen die Führungsstangen (48) angelenkt sind, und dass das nicht-umlaufende Plateau (34) eine zentrale kreisförmige Ausnehmung zur Aufnahme des äusseren Laufringes des Kugellagers (31) aufweist, mittels welchem das umlaufende Plateau (23) drehbar auf dem nicht-umlaufenden Plateau (34) befestigt ist.

## Claims

1. Device comprising cyclic plates (23, 34) for controlling the angle of attack of the blades of a helicopter lift rotor which is integral with a rotor shaft (1) and driven in rotation by this latter about an axis of rotation (A) of the rotor, the device comprising:
— two cyclic plates (23, 34) disposed about the rotor shaft (1) and one of which is a rotary plate (23) driven in rotation with the rotor shaft (1) and mounted for rotation by means of at least one ball bearing (31) on the other non rotary plate (34), secured against rotation about the axis (A) of the rotor,
— a mechanism for guiding the non rotary plate (34) in axial translation and angular movement with respect to the rotor shaft (1), and
— a mechanism for driving the rotary plate (23) and securing the non rotary plate (34) against rotation, comprising at least one member (60) pivotably mounted on the one hand to the rotary plate (23) and on the other to the rotor shaft (1), and at least one member (50) pivotably mounted on the one hand to the non rotary plate (34) and on the other to a structural element (2) of the helicopter, the rotary plate (23) following all the movements of the non rotary plate (34) driven by pilot controls (48), and transmitting them to levers controlling the angle of attack of the rotor blades through pitch control links (17) characterized in that the whole of said two mechanisms is formed by two sets of flexible blades (50, 60), which each extends substantially radially with respect to the axis (A) of the rotor and each of which is curved in a plane passing through the axis (A) of the rotor while presenting its concave side towards the plates (23, 34), the first set of blades comprising at least one blade (60) having a transverse stiffness which allows it, on the one hand, to drive the rotary plate (23) in rotation on which each of the blades of the first set is pivotably mounted by its external radial end, whereas its internal radial end is pivotably mounted to the rotor shaft at a fixed point thereon situated above the rotary plate (23), and, on the other hand, to ensure centering of the plates (23, 34) with respect to the rotor shaft (1), each blade of said first set also having a longitudinal flexibility, which associated with the rotation of its pivotably mounted ends, allows it to follow the translational and tilting movements which are imparted to the blades (23, 34) by the pilot controls, and said second set of blades comprising at least one blade (50) having, on the one hand a transverse stiffness which allows it to hold said non rotary plate (34) against rotation, on which each blade (50) of the second set is pivotably mounted by its external radial end, whereas its internal radial end is pivotably mounted to the structural element (2) of the helicopter at a fixed point thereon situated under the non rotary plate (34), and on the other hand, a longitudinal flexibility which, associated with the rotation of its pivotably mounted ends, allows it to follow the translational and tilting movements which are imparted to the non rotary plate (34) by the pilot controls.

2. The device as claimed in claim 1, characteized in that the first set of blades comprises three flexible curved blades (60) spaced apart about the rotor shaft (1), whereas the second set of blades comprises a single flexible curved blade (50).

3. The device as claimed in claim 1, characterized in that the first set of blades comprises a single flexible curved blade (60), whereas the second set of blades comprises three flexible curved blades (50) spaced apart about the rotor shaft (1).

4. The device as claimed in one of claims 1, 2, 3, characterized in that each flexible blade (50, 60) comprises, at its internal radial end, a socket (52, 61) by means of which the blade is mounted for pivoting about a shaft (53, 62) perpendicular to the axis (A) of the rotor and mounted on the rotor shaft (1) or on the structural element (2) of the helicopter, depending on whether the blade belongs to the first or second set of blades.

5. The device as claimed in one of claims 1 to 4, characterized in that each flexible blade (50, 60), comprises at its external radial end, a ball joint (56, 66) by means of which the blade is pivotably mounted to the rotary (23) or non rotary (34) plate depending on whether the blade belongs to the first or second set of blades.

6. The device as claimed in claim 5, characterized in that the ball joint (56', 66') has a laminated structure.

7. The device as claimed in one of claims 4 to 6, characterized in that each blade (50, 60) comprises at at least one of its ends, a fork joint (55, 65) intended to house the corresponding pivoting socket (52, 61) or ball joint (56, 66).

8. The device according to one of claims 1 to 7, characterized in that each flexible blade (50, 60) of one at least of the two sets of blades is made from metal.

9. The device according to one of claims 1 to 8, characterized in that each flexible blade (50, 60) of one at least of said two sets of blades is a laminated blade, formed by a stack of layers or woven materials crossed or not of high mechanical strength fibers coated with a synthetic resin.

10. The device as claimed in claim 9, as attached to claim 7, characterized in that the framework of the fork joint (65, 55) is formed of layers of reinforcing woven material inserted with layers of the laminated structure of the blade (50, 60) between its two ends.

11. Device according to claim 10, characterized in that each laminated blade is molded into shape from woven material layers disposed directly on the socket (52, 61) and/or the pivoting ball joint (56, 66).

12. Device according to one of claims 1 to 11, characterized in that at the level of the fixed pivot point of each blade (60) of the first set on the rotor shaft (1), this latter has a reinforcement (64) in the form of a fork joint with two legs (63) projecting radially outwardly, and between which is engaged a pivot shaft (61) for the internal radial end of the corresponding blade (60).

13. Device according to one of claims 6 to 12, such as attached to claim 3, characterized in that the pitch control links (17) and the pilot controls (48) are mounted respectively to the rotary plate (23) and to the non rotary plate (34) about shafts (20, 45) situated respectively in a transverse plane ($M_2$) of the rotary plate (23) and in a transverse plane ($M_1$) of the non rotary plate (34), and the ball joint (56', 66') at the external radial end of the flexible blade or blades (50, 60) of at least one set of blades is mounted on the rotary (23) or non rotary (34) plate for pivoting about a shaft (57, 67) situated, on the one hand, radially inside the pivot shafts (20, 45) of the links (17) or the pilot controls (48) on the corresponding plate (23, 34), and on the other hand, respectively above said transverse plane ($M_2$) of the rotary plate (23) or below said transverse plane ($M_1$) of the non rotary plate (34).

14. Device according to one of claims 6 to 12, as attached to claim 3, characterized in that the ball joint (56, 66) pivotably mounting the external radial end of the flexible blade or blades (50, 60) of at least one set of blades is centered on a shaft (20, 45) pivotably mounting a pitch control link (17) or a pilot control (48) respectively on the rotary plate (23) or on the non rotary plate (34).

15. Device according to one of claims 1 to 14, characterized in that the first set of flexible blades (60) comprises two pairs of blades, the two blades (60) of each pair extending in the same radial direction but on each side of the rotor shaft (1) an perpendicularly to the radial direction of the blades (60) of the other pair, the blades being pivotably mounted by their external radial end at the four corners (22) of the rotary plate (23), having a substantially square shape in a plane view, and which has a circular central opening for housing a sleeve (30) surrounding the rotor shaft (1) without contact and interlocked for rotation with the internal ring of the ball bearing (31) by means of which the rotary plate (23) is mounted for rotation on the non rotary plate (34).

16. Device as claimed in one of claims 1 to 15, characterized in that the second set of flexible blades comprises a single blade (50) mounted by its external radial end for pivoting on an apex (41) of the non rotary plate (34) of a substantially triangular shape in plane view, and on the three apices (41) of which the pilot controls (48) are also mounted the non rotary plate (34) having a central circular recess for housing the external ring of the ball bearing (31) by means of which the rotary plate (23) is mounted for rotation on the non rotary plate (34).

FIG.1

0 179 696

## FIG.2

FIG.3

0 179 696